# EUROPÄISCHE PATENTSCHRIFT

(11) **EP 3 162 739 B1**
(45) Veröffentlichungstag und Bekanntmachung des Hinweises auf die Patenterteilung: **13.12.2017**
(21) Anmeldenummer: 15191384.5
(22) Anmeldetag: 26.10.2015
(51) Int. Cl.: B65G 47/57, A22C 15/00, B65G 47/82, B65G 47/84, B65G 15/14

(54) **VORRICHTUNG UND VERFAHREN ZUM ÜBERGEBEN VON WURSTPORTIONEN**
DEVICE AND METHOD FOR TRANSFERRING SAUSAGE PORTIONS
DISPOSITIF ET PROCEDE DE TRANSFERT DE PORTIONS DE SAUCISSES

(43) Veröffentlichungstag der Anmeldung: 03.05.2017
(73) Patentinhaber: Albert Handtmann Maschinenfabrik GmbH & Co. KG, 88400 Biberach (DE)
(72) Erfinder: Willburger, Peter, 88255 Baindt (DE); Heim, Michael, 88400 Biberach (DE); Fürgut, Michael, 88400 Biberach (DE)
(74) Vertreter: Grünecker Patent- und Rechtsanwälte PartG mbB

(56) Entgegenhaltungen:
- EP-B1- 1 712 135
- WO-A1-2012/144890
- DE-A1- 19 821 108
- DE-A1-102008 012 783
- US-A1- 2006 183 413

## Beschreibung

Die Erfindung betrifft eine Vorrichtung und Verfahren zum Übergeben von Wurstportionen gemäß den Oberbegriffen der Ansprüche 1 und 9. Aus der EP 1 712 135 B1 ist bereits eine Vorrichtung nach dem Oberbegriff des Anspruchs 1 bekannt zum geordneten Ablegen von Wurstportionen an einer oder mehreren definierten Positionen von einem Transportband in eine Trommel. Nachteilig bei den bekannten Vorrichtungen ist, dass die Wurstportionen durch äußere Einflüsse, wie z.B. Luftstrom, Erschütterungen etc. oder durch innere Einflüsse, wie z.B. Krümmung, Veränderung der Form durch innere Spannung etc. vor dem Übergeben auf die Trommel herunterfallen können oder aber schief auf dem Förderband liegen, so dass kein geordnetes Gruppieren möglich ist. Es kommt somit oftmals zu Schwierigkeiten die Würste korrekt auszurichten.

Hiervon ausgehend liegt der vorliegenden Erfindung die Aufgabe zugrunde, eine Vorrichtung und ein Verfahren zur Übergabe von einzelnen oder mehreren Wurstportionen von einer ersten Transporteinrichtung auf eine zweite Transporteinrichtung bereitzustellen, die ein verbessertes und sicheres Übergeben der Wurstportionen ermöglichen.

Erfindungsgemäß wird diese Aufgabe durch die Merkmale der Ansprüche 1 und 9 gelöst.

Bei dieser Erfindung versteht man unter dem Ausdruck "Wurstportion" eine Einzelwurst, wobei auch mehrere Wurstportionen, d.h. Einzelwürste, die hintereinander in Transportrichtung auf der ersten Transporteinrichtung antransportiert werden, gleichzeitig von der Ausstoßeinrichtung auf die zweite Transporteinrichtung ausgestoßen werden können. Die Einzelportionen, d.h. Einzelwürste, können dabei voneinander getrennt sein oder aber auch als Wurstkette vorliegen. Die Wurstportionen werden mit einer ersten Transporteinrichtung zum Transportieren der Wurstportionen antransportiert. Mit Hilfe einer Ausstoßeinrichtung können die Wurstportionen aus der ersten Transporteinrichtung auf eine zweite Transporteinrichtung, die als Trommel oder Fächerband ausgebildet ist, geschoben werden. Erfindungsgemäß ist die erste Transporteinrichtung derart ausgebildet, dass sie ein unteres und ein oberes umlaufendes Transportmittel aufweist, zwischen denen die Wurstportionen transportiert werden können. Somit können die antransportierten Würste vor und während der Übergabe auf die zweite Transporteinrichtung sicher in ihrer Position gehalten werden. Die Wurstportionen können so während des Transports auf der ersten Transporteinrichtung und bei der Übergabe nicht herunterfallen und auch nicht verrutschen, so dass es keine unerwünschten Relativbewegungen gibt und die Wurstportionen korrekt positioniert werden können. Somit können beliebige Gruppierungsaufträge exakt durchgeführt werden. Selbst wenn die Wurstportionen gekrümmt sind oder eine veränderte Form aufweisen, können diese sicher transportiert und übergeben werden. Somit wird eine hohe Positioniergenauigkeit bei der Übergabe in die zweite Transporteinrichtung erreicht. Gemäß der vorliegenden Erfindung kann zumindest eine erste Fördereinrichtung pro zweite Fördereinrichtung vorgesehen sein - jedoch auch mehrere erste Fördereinrichtungen pro zweite Fördereinrichtung. Jede erste Fördereinrichtung (unabhängig davon, ob eine oder mehrere angeordnet sind) kann dabei auch mindestens eine oder jeweils mehrere Ausstoßeinrichtungen aufweisen.

Die erfindungsgemäße Anordnung ermöglicht unter anderem auch, dass die Würste in Längsrichtung ausgerichtet mit einer ersten Transporteinrichtung antransportiert werden können und gleichzeitig seitlich über die Ausstoßeinrichtung an eine Trommel oder ein Fächerband abgegeben werden können, wobei, wenn dies gewünscht ist, auch ein Teil der Würste die Ausstoßeinrichtung passiert, und die Vorrichtung am Ende der ersten Transporteinrichtung - in der ersten Transportrichtung ausgerichtet - verlassen kann.

Es ist vorteilhaft, wenn das erste und zweite Transportmittel als Transportbänder ausgebildet sind. Vorteilhafterweise ist deren Abstand zueinander einstellbar. Somit kann der Abstand der Transportmittel genau an das Wurstkaliber, d.h. an den Durchmesser der Wurstportionen, angepasst werden, derart, dass die Wurstportionen sicher gehalten werden können, ohne gleichzeitig beschädigt zu werden. Somit kann die Vorrichtung für unterschiedliche Prozesse und Wurstkaliber verwendet werden.

Vorteilhafterweise umfasst die Vorrichtung eine Steuereinrichtung, die die Geschwindigkeiten der ersten und/oder zweiten Transporteinrichtung und/oder Ausstoßeinrichtung steuert, insbesondere aneinander anpasst. Die Geschwindigkeit der ersten und zweiten Transporteinrichtung ist also variabel. Die Geschwindigkeit der ersten und zweiten Transporteinrichtung kann auch an die Geschwindigkeit einer weiteren Transporteinrichtung angepasst werden, die die Wurstportionen der Vorrichtung zuführt. Die Antriebe des ersten und zweiten Transportmittels können auch mechanisch gekoppelt sein, so dass die beiden Transportmittel zwangsweise die gleiche Geschwindigkeit aufweisen. Erfindungsgemäß ist die Ausstoßeinrichtung derart ausgebildet, dass sie sich zwischen dem ersten und zweiten Transportmittel hin und her bewegen kann, d.h. dass sie sich zwischen den Transporteinheiten bewegen kann. So ist es möglich, dass die Wurstportionen im Stillstand der ersten Transporteinrichtung oder während des Transports der Wurstportionen in Transportrichtung TR2 ausgestoßen werden können.

Gemäß einer bevorzugten Ausführungsform sind mehrere Ausstoßeinrichtungen hintereinander an der ersten Transporteinrichtung angeordnet. Das Ausstoßen kann dabei in eine oder in entgegengesetzte Richtungen erfolgen. Somit können unterschiedliche Gruppierungsaufträge realisiert werden.

Es ist ganz besonders vorteilhaft, wenn die erste Transporteinrichtung seitlich, vorzugsweise um die Längsachse der Würste bzw. eine Mittelachse L der ersten Transporteinrichtung geneigt angeordnet ist - d.h. , dass die Auflageflächen der Transportmittel seitlich zu einer Horizontalebene ausgerichtet sind. Dadurch kann die erste Transporteinrichtung schräg und somit näher an der Trommel bzw. dem Fächerband, angeordnet werden. Durch die schräge Anordnung der ersten Transporteinrichtung kann die erste Transporteinrichtung an unterschiedlichen Positionen am Umfang der zweiten Transporteinrichtung angeordnet werden. Die Wurstportionen können somit schonender in Aufnahmefächer der zweiten Transporteinrichtung übergeben werden. Die Auflagefläche der Transportmittel ist nun nicht mehr horizontal ausgerichtet sondern schräg. Dies ist möglich, da die Wurstportionen durch das erste und zweite Transportmittel gehalten werden und nicht vom Transportband herabrollen können.

Es ist möglich, dass mehrere erste Transporteinrichtungen an mehreren Positionen am Umfang der zweiten Transporteinrichtung angeordnet sein können, was ermöglicht, dass mehrere Produktströme zusammengeführt werden können, oder unterschiedliche Produkte zusammen gruppiert werden können. Vorteilhafterweise umfasst die zweite Transporteinrichtung, d.h. die Trommel oder das Fächerband, mehrere umlaufende Aufnahmefächer auf, die von einer Abdeckung abgedeckt sind, die sich zumindest über einen Teil des Umfangs der zweiten Transportrichtung erstreckt. An Stellen, an denen Wurstportionen zu- oder abgeführt werden, weist die Abdeckung entsprechende Öffnungen auf.

Es ist ganz besonders vorteilhaft, wenn die Abdeckung als mit der Trommel oder dem Fächerband mitlaufende Abdeckung, vorzugsweise als mitlaufendes Band oder Rollenteppich, ausgebildet ist. Somit gibt es beim Transportieren der Wurstportionen keine oder eine nur geringe Relativbewegung zwischen Abdeckung und Wurstportion, was wiederum zu einem besonders schonenden Übergeben und Transport der Wurstportionen führt. Ist die Abdeckung angetrieben, so wird die Geschwindigkeit derart eingestellt, dass die Relativgeschwindigkeit zwischen Wurstportion, bzw. Trommel und Abdeckung möglichst gegen Null geht.

Gemäß der vorliegenden Erfindung transportiert die erste Transporteinrichtung die Würste in einer ersten Transportrichtung TR1, entlang der Längsrichtung der Wurstportionen und die Ausstoßeinrichtung stößt die Würste in einer zweiten Transportrichtung TR2 aus, die unter einem Winkel von 45° bis 135°, vorzugsweise unter einem Winkel von 80° bis 100°, insbesondere 90° zur ersten Transporteinrichtung TR1 verläuft.

Bei dem erfindungsgemäßen Verfahren zum Übergeben von Würsten von einer ersten Transporteinrichtung auf eine zweite Transporteinrichtung ist die zweite Transporteinrichtung als Trommel oder Fächerband ausgebildet. Die Würste werden entlang ihrer Längsrichtung zwischen einem oberen und unteren umlaufenden Transportmittel der ersten Transporteinrichtung antransportiert. Die Wurstportionen werden dann mittels Ausstoßeinrichtungen seitlich aus der ersten Transporteinrichtung in die zweite Transporteinrichtung geschoben.

Der Abstand a der Transportmittel wird dabei vorab in Abhängigkeit des Wurstkalibers eingestellt, insbesondere auf einen Abstand a in der Mitte der Auflageflächen (in Richtung der Breite der Auflagefläche betrachtet) von 70 % bis 100 % des Wurstkalibers, d.h. des Durchmessers der Wurst. Die Ausstoßeinrichtung bewegt sich beim Ausstoßen in einen Bereich zwischen dem ersten und zweiten Transportmittel. Die Wurstportionen können vorteilhaferweise unter einem Winkel geneigt zur Horizontalebene in die Aufnahmefächer der zweiten Transporteinrichtung geschoben werden, insbesondere, um einen Winkel zwischen 0° bis 180°. Dies ermöglicht, dass die Wurstportionen besonders schonend übergeben werden können und der Abstand zwischen der ersten Transporteinrichtung und der zweiten Transporteinrichtung gering gehalten werden kann.

Es ist vorteilhaft, wenn die Wurstportionen an mehreren am Umfang angeordneten Positionen von entsprechenden mehreren ersten Transporteinrichtungen in die Aufnahmefächer der zweiten Transporteinheit geschoben werden können.

Die Erfindung betrifft ebenfalls eine Füllmaschine zum Herstellen von Würsten mit einem Trichter, einem Förderwerk und einem Füllrohr, sowie einer Vorrichtung nach mindestens einem der Ansprüche 1-8. Die vorliegende Erfindung wird nachfolgend unter Bezugnahme der folgenden Figuren näher erläutert.
- Fig. 1: zeigt grob schematisch einen Längsschnitt durch eine Vorrichtung gemäß einem ersten Ausführungsbeispiel der vorliegenden Erfindung.
- Fig. 2: zeigt grob schematisch einen Längsschnitt durch eine Vorrichtung gemäß einem zweiten Ausführungsbeispiel der vorliegenden Erfindung.
- Fig. 3: zeigt grob schematisch eine Aufsicht auf eine Vorrichtung gemäß der vorliegenden Erfindung gemäß einem weiteren Ausführungsbeispiel mit zwei Ausstoßeinrichtungen.
- Fig. 4: zeigt in perspektivischer Darstellung eine zweite Transporteinrichtung, die als Trommel ausgebildet ist gemäß der vorliegenden Erfindung.
- Fig. 5A: zeigt grob schematisch die Auflagefläche eines unteren Transportmittels gemäß der vorliegenden Erfindung.
- Fig. 5B: zeigt grob schematisch einen Querschnitt durch eine erste Transporteinrichtung.
- Fig. 5C: zeigt die in Fig. 5B gezeigte Transporteinrichtung mit zu einer Horizontalfläche geneigten Auflagefläche.
- Fig. 6: zeigt eine Aufsicht auf eine Füllmaschine gemäß einem Ausführungsbeispiel der vorliegenden Erfindung.
- Fig. 7: zeigt einen Längsschnitt durch ein weiteres Ausführungsbeispiel gemäß der vorliegenden Erfindung mit zwei ersten Transporteinrichtungen.
- Fig. 8: zeigt einen Längsschnitt durch eine weitere Ausführungsform gemäß der vorliegenden Erfindung mit einer schräggestellten ersten Transporteinrichtung.
- Fig. 9: zeigt grob schematisch einen weiteren Längsschnitt gemäß einem weiteren Ausführungsbeispiel gemäß der vorliegenden Erfindung mit mitlaufendem Abdeckmittel.
- Fig. 10: zeigt grob schematisch eine Aufsicht auf ein weiteres Ausführungsbeispiel gemäß der vorliegenden Erfindung mit zwei ersten Transporteinrichtungen.
- Fig. 11: zeigt grob schematisch einen Längsschnitt durch eine Trommel gemäß der vorliegenden Erfindung.

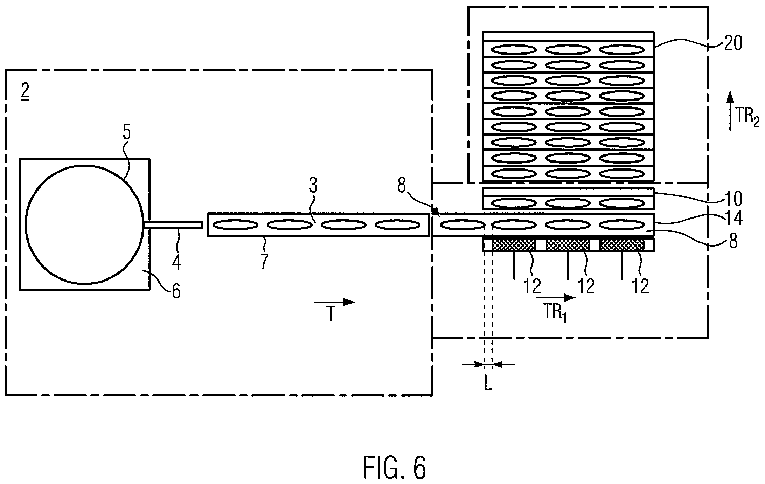

Fig. 6 zeigt eine Aufsicht auf eine Füllmaschine gemäß der vorliegenden Erfindung. Eine Füllmaschine weist beispielsweise ein Maschinengehäuse 6 auf und einen Trichter 5 zum Einfüllen von pastöser Masse, wie beispielsweise Wurstbrät, sowie ein Füllrohr 4, in das das Wurstbrät mit Hilfe einer Fördereinrichtung, z.B. einer Flügelzellenpumpe, in ein Füllrohr 4 transportiert wird. Durch das Füllrohr 4 kann die pastöse Masse in bekannter Weise in Wursthüllen ausgestoßen werden und z.B. im Anschluss durch Verdrängerelemente in Einzelwürste unterteilt werden und gegebenenfalls auch von einer Abdreheinrichtung abgedreht werden (nicht gezeigt). Die so erzeugten Einzelwürste können z.B. über eine nicht dargestellte Trenneinheit in einzelne Wurstportionen geschnitten werden. Die einzelnen Wurstportionen können auch in Wurstketten mit einer bestimmten Anzahl von Einzelwürsten zusammenhängen. In Fig. 6 werden die Würste durch die Trenneinrichtung 3 in Einzelwürste unterteilt. Die Trenneinheit 3 ist hier in eine Transporteinheit 7 integriert. Die Transporteinrichtung 7 transportiert die Würste in Transportrichtung T zur erfindungsgemäßen Vorrichtung.

Die von der Füllmaschine 2 kommenden Wurstportionen 1 werden von der ersten Transporteinrichtung 8 aufgenommen und in Transportrichtung TR₁ entlang ihrer Längsachse ausgerichtet transportiert. Dabei kann die erste Transporteinrichtung 8 zumindest teilweise schneller laufen als die Transporteinrichtung 7 der Füllmaschine 2, derart, dass eine Lücke L zwischen den Einzelwurstportionen 1 entsteht. Dabei kann sich entweder die erste Transporteinrichtung schneller bewegen als die Transporteinrichtung 7 der Füllmaschine 2 oder die erste Transporteinrichtung 8 kann beim Übergang einer Wurstportion 1 bzw. beim Übergang einer Trennstelle zwei Wurstportionen 1 kurzzeitig schneller laufen als die Transporteinrichtung 7 der Füllmaschine, so dass eine Lücke L entsteht.

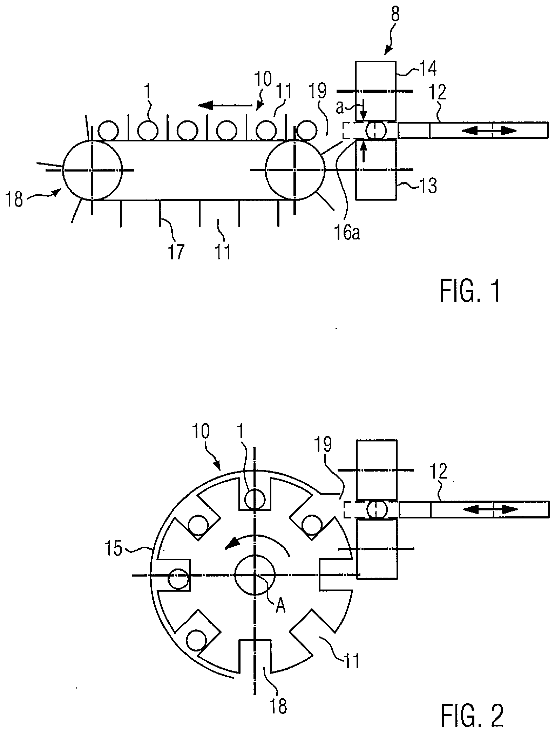

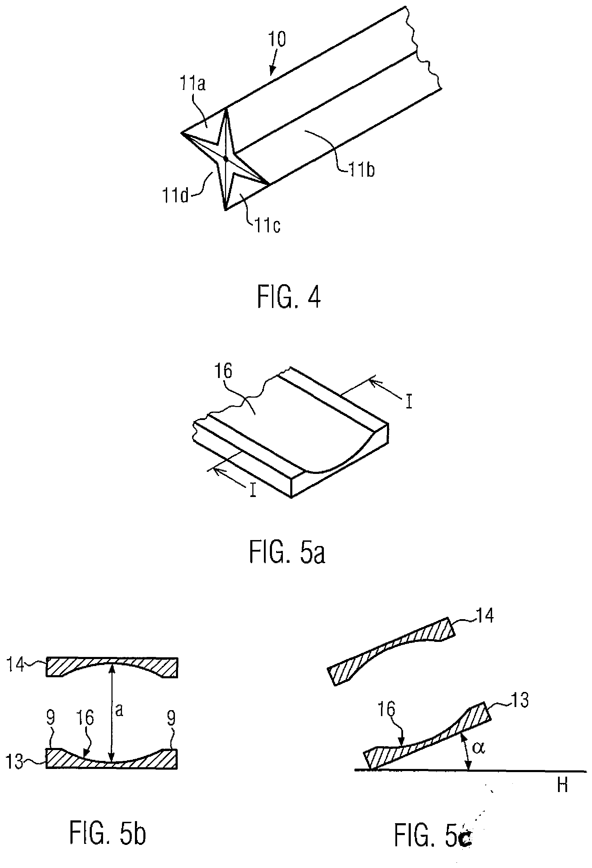

Die erste Transporteinrichtung 8 umfasst, wie insbesondere aus den Fig. 1 und 2 hervorgeht, zwei übereinander liegende Transportmittel 13, 14, die hier z.B. als umlaufende Transportbänder ausgebildet sind. Die Wurstportionen 1 sind dabei zwischen den Transportmitteln 13, 14 angeordnet, und werden von den Transportmitteln 13, 14 gehalten und transportiert. Der Abstand der Transportmittel 13, 14 ist dabei, insbesondere stufenlos, verstellbar, derart, dass eine Wurst sicher gehalten und transportiert werden kann. Der Abstand a der beiden Transportmittel zueinander bzw. der Abstand a zwischen den Auflageflächen 16 liegt in einem Bereich von 70 % bis 100 % des Wurstkalibers. Wie aus Fig. 5A-C hervorgeht, kann die Auflagefläche nicht nur eben ausgebildet sein, sondern auch eine hier z.B. konkave Aussparung aufweisen, die durch seitliche Bandführungen 9 begrenzt ist. Als Abstand a wird hier der maximale Abstand a in der Mitte der Auflagefläche zwischen den Führungen 9 betrachtet. Für den Fall einer geraden Auflagefläche 16 ist der Abstand a konstant (mit Ausnahme der gegebenenfalls vorgesehenen Randführungen). Der Abstand a kann vorzugsweise derart eingestellt werden, dass er in einem Bereich von 70 % bis 100 % des Wurstkalibers liegt.

Die Vorrichtung umfasst weiter mindestens eine Ausstoßeinrichtung 12, in Fig. 6 z.B. drei Stück, zum Ausschieben der Wurstportionen aus der ersten Transporteinrichtung 8 auf eine zweite Transporteinrichtung 10, die als Trommel oder Fächerband ausgebildet ist. Somit können die einlaufenden einzelnen Wurstportionen z.B. hintereinander aus der ersten Transporteinrichtung ausgestoßen werden. Die Ausstoßeinrichtung 12 ist hier jeweils als hin und her bewegbarer Schieber ausgebildet, der sich zwischen dem unteren und oberen Transportmittel 13, 14 hin und her bewegen kann, und die Wurstportion 1 somit in eine zweite Transportrichtung TR₂ ausstoßen kann. Die Ausstoßeinrichtung schiebt die Wurstportionen auf die zweite Transporteinrichtung 10 und zwar in entsprechende Aufnahmefächer 11.

In Fig. 1 ist die zweite Transporteinrichtung 10 als Fächerband 10 ausgebildet, das ein umlaufendes Band umfasst, sowie mehrere gleichmäßig um den Umfang verteilte Trennwände 17, zwischen denen sich die Aufnahmefächer 11 ausbilden. Wie insbesondere auch aus Fig. 1 hervorgeht, bewegt sich die Ausstoßeinrichtung 12 bzw. dessen vorderer Schieberbereich bis über die Außenkante 16a der Transportmittel 13, 14, die der zweiten Transporteinrichtung 10 zugewandt ist. Der Schieber bewegt sich jedoch nur so weit, dass er nicht mit einer Trennwand 17 kollidiert. Somit können die Wurstportionen in einem Abgabebereich 19 sicher in die Aufnahmefächer 11 eingebracht werden. Bei diesem Ausführungsbeispiel befindet sich die erste Transporteinrichtung 8 seitlich neben der zweiten Transporteinrichtung 10, wobei die Auflagefläche 16 des unteren Transportmittels 13 im Wesentlichen auf der gleichen Höhe liegt wie die horizontal ausgerichtete Auflagefläche der zweiten Transporteinrichtung 10.In einem Auslassbereich 18 können die Wurstportionen wieder abgegeben werden.

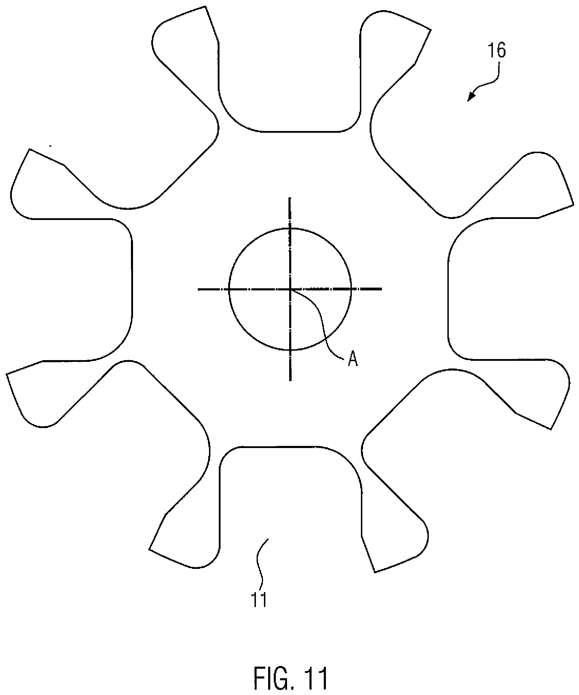

Alternativ kann, wie in Fig. 2 dargestellt ist, die zweite Transporteinrichtung 10 auch als Trommel ausgebildet sein, die sich um eine Achse A dreht, und die mehrere um den Umfang verteilte Aufnahmefächer 11 aufweist, in die in einem Aufnahmebereich 19 Wurstportionen 1 über die Ausstoßeinrichtung 12 eingeschoben werden. Wie in Fig. 4 dargestellt ist, kann die Trommel auch als Trommelmagazin mit mehreren Längsrillen 11a, b, c, d zur Aufnahme der Wurstportionen 1 ausgebildet sein. Auch Fig. 11 zeigt eine mögliche Ausgestaltung der Aufnahmefächer 11. Die Wurstportionen 1 werden in den Aufnahmefächern 11 in Pfeilrichtung transportiert und ebenso wie in Fig. 1 auch dargestellt ist, an einem Auslassbereich 18 abgeführt. Wie in Fig. 6 dargestellt ist, können die Würste dabei beispielsweise auf ein weiteres Förderband 20 abgegeben werden. Die Wurstportionen können auch in entsprechende Aufnahmebehälter bzw. - schalen abgegeben werden.

Wie insbesondere aus Fig. 2 hervorgeht, umfasst die zweite Transporteinrichtung 10 vorzugsweise eine Abdeckung 15, die zumindest einen Teil des Umfangs der zweiten Transporteinrichtung abdeckt. Die Abdeckung spart zumindest einen Bereich im Aufnahmebereich 19 aus, in dem die Wurstportionen 1 von der Ausstoßeinrichtung 12 eingeschoben werden und weist darüber hinaus eine Aussparung am Auslassbereich 18 auf, an dem die Wurstportionen die zweite Transporteinrichtung wieder verlassen. Es ist auch nicht nötig, zwischen Auslassbereich 18 und Einlassbereich 19 eine Abdeckung vorzusehen.

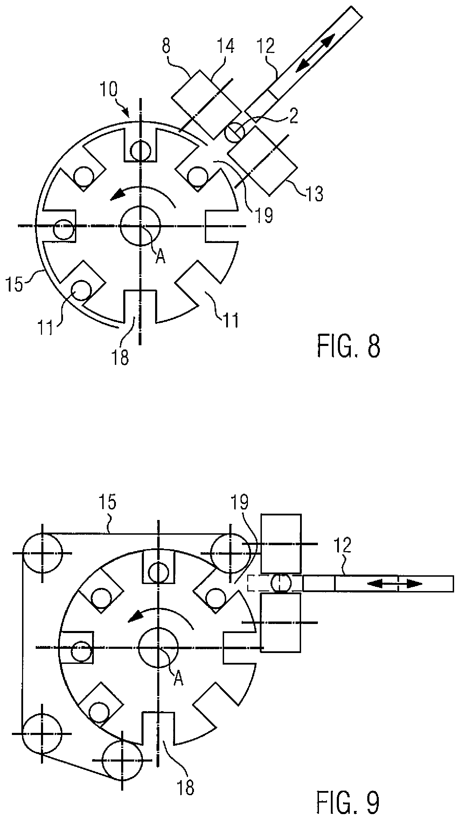

Wie insbesondere in Fig. 9 dargestellt ist, kann die Abdeckung 15 auch als mitlaufende angetriebene Abdeckung ausgebildet sein, hier z.B. als mitlaufendes Band 15. Dies bringt den Vorteil mit sich, dass die Relativgeschwindigkeit zwischen der zweiten Transporteinrichtung 10, d.h. auch der mittransportierten Wurstportion und der Abdeckung 15 minimiert bzw. auf null reduziert werden kann. Dies ist insbesondere im unteren Bereich der Transporteinrichtung 10 von Vorteil, da es hier möglich ist, dass die Wurstportion 1 durch die Schwerkraft in Kontakt mit der Abdeckung 15 kommt. Die mitlaufende Abdeckung 15 ermöglicht ein besonders schonendes Transportieren der Wurstportionen. Auch das Fächerband, das in Fig. 1 gezeigt ist, kann, auch wenn nicht dargestellt ist, eine Abdeckung 15 aufweisen, die entweder, wie in Fig. 2 dargestellt ist, als Abdeckblech ausgebildet ist, und sich zumindest um einen Teil des Umfangs der zweiten Transporteinrichtung erstreckt und zumindest im Einlass- und Auslassbereich 18, 19 geöffnet ist oder aber als mitlaufende Abdeckung 15, wie in Fig. 9 dargestellt ist, ausgebildet ist. Die mitlaufende Abdeckung erstreckt sich in Drehrichtung der zweiten Transporteinrichtung betrachtet von einem Bereich hinter dem Aufnahmebereich 19 bis zu einem Bereich vor dem Auslassbereich 18.

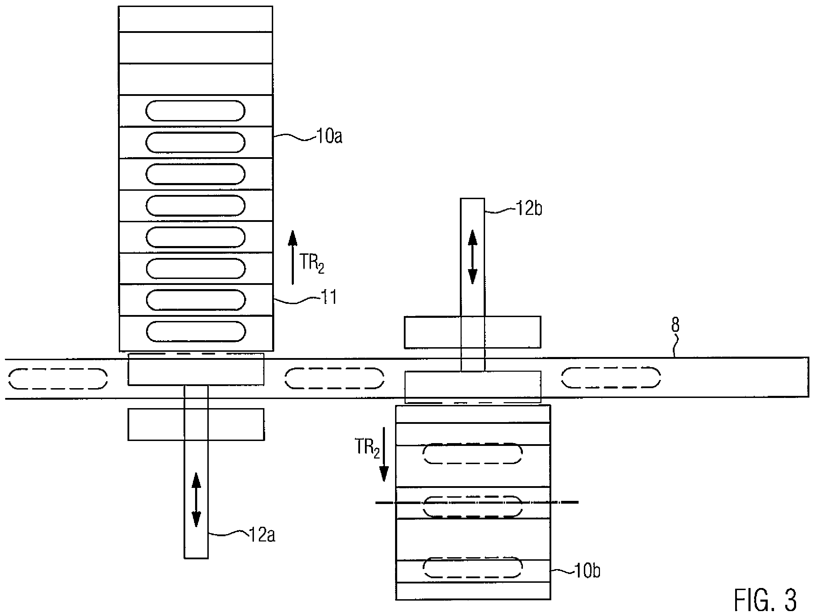

Fig. 3 zeigt eine Aufsicht auf eine Vorrichtung gemäß der vorliegenden Erfindung. In der Abbildung links erkennt man die erste Transporteinrichtung 8 sowie eine Ausstoßeinrichtung 12a, die die Wurstportionen 1 in einer Richtung TR₂ in die Aufnahmefächer 11 einer zweiten Transporteinrichtung 10, hier z.B. eines Fächerbands 10a stößt.

Zusätzlich oder alternativ ist hier die Ausstoßeinrichtung 12b auf der anderen Seite der Transporteinrichtung 8 angeordnet, die hier die Wurstportionen 1 in die zweite Transporteinrichtung 10b, die beispielsweise als Trommel ausgebildet ist, ausstößt. Dabei ist die Ausstoßrichtung TR₂ hier der Richtung TR₂ der ersten Ausstoßeinrichtung 12a entgegengesetzt.

Das bedeutet also, dass für eine erste Transporteinrichtung 8 mehrere Ausstoßeinrichtungen und mindestens eine weitere zweite Transporteinrichtung 10 oder aber auch mehrere zweite Transporteinrichtungen 10a, b vorgesehen sein können.

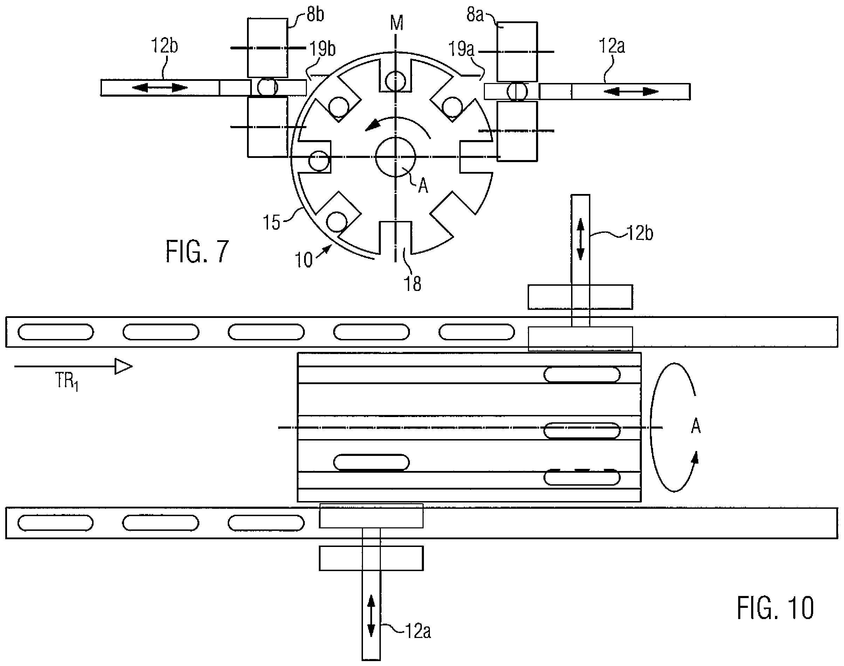

Ein besonders vorteilhaftes Ausführungsbeispiel ist in Fig. 7 dargestellt, wobei es hier mehrere erste Transporteinrichtungen 8a, b gibt, die an unterschiedlichen Positionen angeordnet sind. Die beiden ersten Transporteinrichtungen 8a, b weisen entsprechende Ausstoßeinrichtungen 12a, 12b aus, um die entsprechenden Wurstportionen in entsprechenden Einlassbereichen 19a, 19b zu schieben. Dabei werden die ersten Transporteinrichtungen 8a,b und die entsprechenden Ausstoßeinrichtungen 12a, b sowie die zweite Transporteinrichtung 10 derart von einer Steuerung angesteuert, dass die einzelnen Aufnahmefächer 11 im entsprechenden Aufnahmebereich 19a, b jeweils nur von einer Ausstoßeinrichtung 12a oder 12b befüllt werden. Bei dem in Fig. 7 gezeigten Ausführungsbeispiel befinden sich die beiden Ausstoßeinrichtungen und Aufnahmebereiche 19a, b in einer in Bezug zu mittleren Längsachse M gegenüberliegenden Position.

Wie in Fig. 10 gezeigt ist, ist es auch möglich, dass die beiden ersten Transporteinrichtungen 12a,12b zwar parallel zueinander verlaufen, jedoch die beiden Ausstoßeinrichtungen 12a, b auf unterschiedlichen Seiten der Drehachse A versetzt zueinander angeordnet sind, so dass es möglich ist, dass in einem Aufnahmefach 11 einer Trommel oder eines Fächerbandes jeweils eine Wurstportion einer ersten 12a und einer zweiten 12b Ausstoßeinrichtung aufgenommen werden können. Bei den in Fig. 7 und 10 gezeigten Ausführungsbeispiel können also mehrere Transporteinrichtungen 8a, b an mehreren Positionen am Umfang der zweiten Transporteinrichtung 10 angeordnet sein. Auch wenn in Fig. 7 und 10 nur zwei erste Transporteinrichtungen mit entsprechenden Ausstoßeinrichtungen gezeigt sind, so können beispielsweise bis zu 6 Transporteinrichtungen 8 angeordnet werden.

Fig. 8 zeigt eine besonders bevorzugte Ausführungsform der vorliegenden Erfindung, bei der die erste Transporteinrichtung 8 schräg gestellt ist. Das heißt, dass die Transporteinrichtung 8 vorzugsweise um die Längsachse L der Wurst bzw. Mittelachse der ersten Transporteinrichtung seitlich geneigt wird. Das bedeutet, dass die Auflagefläche 16, wie in Fig. 5c gezeigt ist, um einen Winkel α zwischen 0 bis 180° zu einer Horizontalebene H ausgerichtet ist. Durch eine entsprechend schräge Anordnung kann die erste Transporteinrichtung noch näher an die zweite Transporteinrichtung 10 rücken, was eine besonders schonende Übergabe der Wurstportionen ermöglicht. Dadurch, dass die Wurstportionen zwischen den Transportmitteln 13, 14 gehalten werden, ist eine entsprechend schräge Anordnung überhaupt erst möglich. Eine entsprechende Schrägstellung ermöglicht, dass die erste Transporteinrichtung an einer beliebigen Position rund um den Umfang der zweiten Transporteinrichtung 10 angeordnet werden kann.

Wenn auch nicht dargestellt, kann die Vorrichtung eine Steuereinrichtung umfassen, die die Geschwindigkeiten der ersten und/oder zweiten Transporteinrichtung(en) steuert, insbesondere aneinander anpasst. Die Geschwindigkeit der ersten und zweiten Transporteinrichtung 8, 10 ist also variabel. Die Geschwindigkeit der ersten und zweiten Transporteinrichtung kann auch an die Geschwindigkeit einer weiteren Transporteinrichtung 7 angepasst werden, die die Wurstportionen von der Füllmaschine zur Vorrichtung transportiert. Die Steuereinrichtung steuert auch die Ausstoßeinrichtung an. Auch eine möglicherweise zusätzlich vorgesehene Transporteinrichtung 20 nach der zweiten Transporteinrichtung 10 kann von der Steuereinrichtung angesteuert werden.

Bei dem erfindungsgemäßen Verfahren wird beispielsweise eine Wurstportion 1 über eine erste Transporteinrichtung 8 antransportiert. Die Transportmittel 13, 14 der Transporteinrichtung halten die Wurstportion 1 sicher gegen Verrutschen und schützen die Wurstportion vor Herabfallen. Der Abstand a der Transportmittel 13, 14 wurde vorab auf einen passenden Abstand a eingestellt, der etwa 70 % bis 100 % des Wurstkalibers entspricht. Die antransportierten Wurstportionen wurden vorab in der in Fig. 6 gezeigten Füllmaschine 2 erzeugt und über die Transporteinrichtung 7 der Füllmaschine 2 antransportiert. Es ist möglich, wie zuvor beschrieben, die Würste durch geeignete Wahl der Geschwindigkeiten der Transporteinrichtung 7 oder 8 zu vereinzeln und diese zu beabstanden. Es ist jedoch auch möglich, keinen Abstand zu erzeugen und mehrere einzelne Wurstportionen gleichzeitig zu übergeben.

Es wird mindestens eine Wurstportion 1 durch mindestens eine Ausstoßeinrichtung 12 in ein Aufnahmefach 11 einer zweiten Transporteinrichtung 10, d.h. einer Trommel oder eines Fächerbands, in einer zweiten Transportrichtung TR₂ ausgestoßen. Die Wurstportion wird dann durch die zweite Transporteinrichtung von einem Einlassbereich 19 zu einem Auslassbereich 18 transportiert. Dabei werden die Wurstportionen 1 vorzugsweise durch eine Abdeckung 15 in den Aufnahmefächern 11 gehalten. Die Abdeckung 15 bewegt sich dabei vorzugsweise mit gleicher Umfangsgeschwindigkeit wie die Trommel bzw. Fächerbandaußenfläche, so dass die Relativgeschwindigkeit zwischen Abdeckung 15 und mittransportierter Wurstportion bzw. Außenfläche der zweiten Transporteinrichtung möglichst gering wird. Dadurch kann die Abdeckung sehr nahe an der Oberfläche der zweiten Transporteinrichtung angeordnet werden. Vorzugsweise kann die Abdeckung 15 die zweite Transporteinrichtung berühren, zumindest abschnittsweise abdecken. Die von der zweiten Transporteinrichtung 10 transportierten Portionen werden dann über den Auslassbereich 18 entweder an ein weiteres Transportband 20 oder aber einen Aufnahmebehälter abgegeben.

## Patentansprüche

1. Vorrichtung zum Übergeben von Wurstportionen (1) mit
einer ersten Transporteinrichtung (8) zum Transportieren der Wurstportionen (1) in ihrer Längsrichtung,
einer Ausstoßeinrichtung (12) zum Ausschieben der Wurstportionen (1) aus der ersten Transporteinrichtung (8) auf eine zweite Transporteinrichtung (10), die als Trommel oder Fächerband ausgebildet ist, **dadurch gekennzeichnet, dass**
die erste Transporteinrichtung (8) ein unteres (13) und ein oberes (14) umlaufendes Transportmittel aufweist, zwischen denen die Wurstportionen (1) transportiert werden, und dass die Ausstoßeinrichtung (12) derart ausgebildet ist, dass sie zwischen dem ersten und zweiten Transportmittel (13,14) hin und her bewegbar ist..

2. Vorrichtung nach Anspruch 1, **dadurch gekennzeichnet, dass** die Transportmittel (13, 14) als Transportbänder ausgebildet sind, deren Abstand a zueinander einstellbar ist.

3. Vorrichtung nach Anspruch 1 oder 2, **dadurch gekennzeichnet, dass** die Vorrichtung eine Steuereinrichtung umfasst, die die Geschwindigkeiten der ersten und/oder zweiten Transporteinrichtung (8, 10) und/oder Ausstoßeinrichtung (12) variabel steuern und insbesondere aneinander anpassen kann.

4. Vorrichtung nach mindestens einem der Ansprüche 1-3, **dadurch gekennzeichnet, dass** mehrere hintereinander angeordnete Ausstoßeinrichtungen (12) angeordnet sind zum gleichzeitigen oder zeitlich versetzten Ausstoßen mehrerer Wurstportionen (1).

5. Vorrichtung nach mindestens einem der Ansprüche 1-4, **dadurch gekennzeichnet, dass** die erste Transporteinrichtung (1) seitlich geneigt, insbesondere um die Längsachse der Wurstportionen bzw. der Mittelachse der ersten Transporteinrichtung, angeordnet ist.

6. Vorrichtung nach mindestens einem der Ansprüche 1-5, **dadurch gekennzeichnet, dass** mehrere Transporteinrichtungen (8) an mehreren Positionen am Umfang der zweiten Transporteinrichtung (10) angeordnet sind.

7. Vorrichtung nach mindestens einem der Ansprüche 1-6, **dadurch gekennzeichnet, dass** die zweite Transporteinrichtung (10) mehrere umlaufende Aufnahmefächer (11) aufweist, die von einer Abdeckung (15) abgedeckt werden, die sich zumindest über einen Teil des Umfangs der ersten Transporteinrichtung (8) erstreckt und die vorzugsweise als eine mit der zweiten Transporteinrichtung mitlaufende Abdeckung (15), insbesondere als mitlaufendes Band oder Rollenteppich, ausgebildet ist.

8. Vorrichtung nach mindestens einem der Ansprühe 1-7, **dadurch gekennzeichnet, dass** die erste Transporteinrichtung (8) die Wurstportionen (1) in einer ersten Transportrichtung TR1 transportiert und die Ausstoßeinrichtung (12) die Wurstportionen in einer zweiten Transportrichtung TR2 ausstößt, die vorzugsweise unter einem Winkel von 80° bis 100° zur ersten Transportrichtung TR1 verläuft.

9. Verfahren zum Übergeben von Wurstportionen von einer ersten Transporteinrichtung (8) auf eine zweite Transporteinrichtung (10), mit einer Vorrichtung nach mindestens einem der Ansprüche 1-8, wobei die zweite Transporteinrichtung (10) als Trommel
oder Fächerband ausgebildet ist, **dadurch gekennzeichnet, dass**
die Wurstportionen in ihrer Längsrichtung zwischen einem oberen und unteren umlaufenden Transportmittel (13, 14) der ersten Transporteinrichtung (8) antransportiert werden, und mittels einer Ausstoßeinrichtung (12) seitlich zwischen dem ersten und zweiten Transportmittel (13,14) aus der ersten Transporteinrichtung (8) in die zweite Transporteinrichtung (10) geschoben werden, und dass sich die Ausstoßeinrichtung (12) beim Ausstoßen in einen Bereich zwischen dem ersten und zweiten Transportmittel (13, 14) hin und her bewegt.

10. Verfahren nach Anspruch 9, **dadurch gekennzeichnet, dass** der Abstand a der Transportmittel (13, 14) in Abhängigkeit des Wurstkalibers (d) eingestellt wird, insbesondere auf einen Abstand a in der Mitte der Auflageflächen (16) von etwa 70 % bis 100 % des Wurstkalibers (d).

11. Verfahren nach mindestens einem der Ansprüche 9-10, **dadurch gekennzeichnet, dass** die Wurstportionen (1) unter einem Winkel geneigt zur Horizontalebene in die Aufnahmefächer (11) der zweiten Transporteinrichtung (10) geschoben werden, insbesondere um einen Winkel zwischen 0 bis 180 Grad.

12. Verfahren nach mindestens einem der Ansprüche 9-11, **dadurch gekennzeichnet, dass** die Wurstportionen (1) an mehreren am Umfang angeordneten Positionen von mehreren ersten Transporteinrichtungen (8) in die Aufnahmefächer (11) der zweiten Transporteinrichtung (10) geschoben werden.

13. Füllmaschine zum Herstellen von Wurstportionen mit einem Trichter (5), einem Förderwerk und einem Füllrohr sowie einer Vorrichtung nach mindestens einem der Ansprüche 1-8.

## Claims

1. Device for transferring sausage portions (1) with
a first transport device (8) for transporting the sausage portions (1) in their longitudinal direction,
an ejection device (12) for pushing the sausage portions (1) from the first transport device (8) to a second transport device (10), which is configured as drum or fan belt, **characterized in that**
the first transport device (8) has a lower (13) and an upper (14) circumferential transport means, between which the sausage portions (1) are transported and **in that** the ejection device (12) is configured such that it is movable to and fro between the first and second transport means (13, 14).

2. Device according to claim 1, **characterized in that** the transport means (13, 14) are configured as conveyer belts, the distance a of which is adjustable to one another.

3. Device according to claim 1 or 2, **characterized in that** the device comprises a control device, which may variably control the velocities of the first and/or second transport device (8, 10) and/or the ejection device (12), and, particularly may adapt the same to one another.

4. Device according to at least one of the claims 1-3, **characterized in that** several ejection devices (12) arranged one after the other are arranged for a simultaneous or delayed emittance of several sausage portions (1).

5. Device according to at least one of the claims 1-4, **characterized in that** the first transport device (8) is arranged laterally inclined, in particular around the longitudinal axis of the sausage portions and/or the middle axis of the first transport device.

6. Device according to at least one of the claims 1-5, **characterized in that** several transport devices (8) are arranged at several positions at the circumference of the second transport means (10).

7. Device according to at least one of the claims 1-6, **characterized in that** the second transport device (10) has several circumferential accommodation compartments (11), which are covered by a cover (15), which at least extends to a part of the circumference of the first transport device (8) and which is preferably configured as a cover (15) running parallel to the second transport device, in particular as parallel running belt or roller carpet.

8. Device according to at least one of the claims 1-7, **characterized in that** the first transport device (8) transports the sausage portions (1) in a first transport direction TR1 and that the ejection device (12) pushes the sausage portions in a second transport direction TR2, which preferably runs about an angle of 80° to 100° to the first transport direction TR1.

9. Method for transferring sausage portions from a first transport device (8) to a second transport device (10), in particular with a device according to at least one of the claims 1-8, whereby the second transport device (10) is configured as drum or fan belt, **characterized in that**
the sausage portions are transported in their longitudinal direction between the upper and lower circumferential transport means (13, 14) of the first transport device (8), and
are pushed sideways by means of an ejection device (12) between the first and second transport means (13, 14) from the first transport device (8) into the second transport device (10) and **in that**
the ejection device (12) during ejection moves to and fro in a region between the first and second transport means (13, 14).

10. Method according to claim 9, **characterized in that** the distance a of the transport means (13, 14) is adjusted depending on the sausage caliber (d), in particular to a distance a in the center of the bearing surfaces (16) of about 70% to 100% of the sausage caliber.

11. Method according to one of the claims 9-10, **characterized in that** the sausage portions (1) are pushed with an angle inclined to the horizontal plane into the accommodation compartments (11) of the second transport device (10), in particular about an angle of between 0 to 180°.

12. Method according to at least one of the claims 9-11, **characterized in that** the sausage portions (1) are pushed at several positions arranged at the circumference of several first transport devices (8) into the accommodation compartments (11) of the second transport device (10).

13. Filling machine for producing sausage portions with a hopper (5), a conveyor and a filling pipe as well as a device according to at least one of the claims 1-8.

## Revendications

1. Ensemble de transfert de portions de saucisse (1) comprenant
un premier dispositif de transport (8) pour transporter les portions de saucisse (1) dans leur direction longitudinale,
un dispositif d'éjection (12) pour éjecter les portions de saucisse (1) du premier dispositif de transport (8) dans un deuxième dispositif de transport (10), qui est réalisé sous forme de tambour ou de bande compartimentée,
**caractérisé en ce que** le premier dispositif de transport (8) comporte un moyen de transport inférieur (13) et supérieur (14) en révolution, entre lesquels sont transportées les portions de saucisse (1), et **en ce que** le dispositif d'éjection (12) est réalisé de manière à pouvoir être déplacé en va et vient entre le premier et le deuxième moyen de transport (13, 14).

2. Ensemble selon la revendication 1, **caractérisé en ce que** les moyens de transport (13, 14) sont réalisés sous forme de bandes de transport dont la distance d'espacement réciproque a peut être réglée.

3. Ensemble selon la revendication 1 ou la revendication 2, **caractérisé en ce que** l'ensemble comprend un dispositif de commande, qui est en mesure de commander les vitesses du premier et/ou du deuxième dispositif de transport (8, 10) et/ou du dispositif d'éjection (12) de manière variable, et notamment de manière à les adapter les unes aux autres.

4. Ensemble selon l'une au moins des revendications 1-3, **caractérisé en ce que** plusieurs dispositifs d'éjection (12) sont agencés les uns à la suite des autres, pour l'éjection simultanée ou décalée dans le temps, de plusieurs portions de saucisse (1).

5. Ensemble selon l'une au moins des revendications 1-4, **caractérisé en ce que** le premier dispositif de transport (8) est agencé de manière latéralement inclinée, notamment autour de l'axe longitudinal des portions de saucisse respectivement de l'axe médian du premier dispositif de transport.

6. Ensemble selon l'une au moins des revendications 1-5, **caractérisé en ce que** plusieurs dispositifs de transport (8) sont agencés en plusieurs positions à la périphérie du deuxième dispositif de transport (10).

7. Ensemble selon l'une au moins des revendications 1-6, **caractérisé en ce que** le deuxième dispositif de transport (10) présente plusieurs compartiments d'accueil (11) en révolution, recouverts par un élément de recouvrement (15), qui s'étend au moins sur une partie de la périphérie du deuxième dispositif de transport (10), et qui de préférence est réalisé en tant qu'élément de recouvrement (15) accompagnant le mouvement du deuxième dispositif de transport, notamment en tant que bande ou tapis à rouleaux accompagnant.

8. Ensemble selon l'une au moins des revendications 1-7, **caractérisé en ce que** le premier dispositif de transport (8) transporte les portions de saucisse (1) dans une première direction de transport TR1, et le dispositif d'éjection (12) éjecte les portions de saucisse dans une deuxième direction de transport TR2, qui s'étend de préférence sous un angle de 80° à 100° par rapport à la première direction de transport TR1.

9. Procédé de transfert de portions de saucisse d'un premier dispositif de transport (8) à un deuxième dispositif de transport (10) à l'aide d'un ensemble de transfert selon l'une au moins des revendications 1-8, le deuxième dispositif de transport (10) étant réalisé sous forme de tambour ou de bande compartimentée, **caractérisé en ce que** les portions de saucisse sont amenées en étant transportées entre un moyen de transport supérieur et inférieur (13, 14) du premier dispositif de transport (8), et sont repoussées du premier dispositif de transport (8) dans le deuxième dispositif de transport (10), latéralement entre le moyen de transport supérieur et inférieur (13, 14), au moyen d'un dispositif d'éjection (12), et **en ce que** lors de l'éjection, le dispositif d'éjection (12) se déplace en va et vient dans une zone entre le premier et le deuxième moyen de transport (13, 14).

10. Procédé selon la revendication 9, **caractérisé en ce que** la distance d'espacement réciproque a des moyens de transport (13, 14) est réglée en fonction du calibre (d) de la saucisse, notamment à une distance d'espacement a, au milieu des surfaces d'appui (16), d'environ 70% à 100% du calibre (d) de la saucisse.

11. Procédé selon l'une au moins des revendications 9-10, **caractérisé en ce que** les portions de saucisse (1) sont repoussées dans les compartiments d'accueil (11) du deuxième dispositif de transport (10), de manière inclinée d'un angle par rapport au plan horizontal, notamment d'un angle entre 0 et 180°.

12. Procédé selon l'une au moins des revendications 9-11, **caractérisé en ce que** les portions de saucisse (1) sont repoussées au niveau de plusieurs positions périphériques, à partir de plusieurs premiers dispositifs de transport (8), dans les compartiments d'accueil (11) du deuxième dispositif de transport (10).

13. Machine de remplissage pour la fabrication de portions de saucisse, comprenant une trémie (5), un groupe d'acheminement et un tube de remplissage, ainsi qu'un ensemble de transfert selon l'une au moins des revendications 1-8.
